# EUROPÄISCHE PATENTSCHRIFT

(11) **EP 1 589 274 B1**
(45) Veröffentlichungstag und Bekanntmachung des Hinweises auf die Patenterteilung: **18.01.2012**
(21) Anmeldenummer: 05008238.7
(22) Anmeldetag: 15.04.2005
(51) Int. Cl.: F16L 55/033, F15B 21/04, F15D 1/02

(54) **Kraftfahrzeug mit einer strömungsakustisch optimierten Rohrleitung**
Automotive with a flow-acoustic optimized flexible pipe
Véhicule automobile avec tuyau flexible à écoulement fluide accoustiquement optimisé

(30) Priorität: 24.04.2004 DE 102004020094
(43) Veröffentlichungstag der Anmeldung: 26.10.2005
(73) Patentinhaber: GM Global Technology Operations LLC, Detroit, MI 48265-3000 (US)
(72) Erfinder: Frensch, Marcel, 55118 Mainz (DE); Herrlich, Werner, 64569 Nauheim (DE); Rückert, Jürgen, 65428 Rüsselsheim (DE); Ölke, Andreas, 65468 Trebur (DE)
(74) Vertreter: Strauss, Peter

(56) Entgegenhaltungen:
- EP-A- 0 077 130
- DE-C- 609 890
- US-A- 3 313 577
- US-A- 5 443 371

## Beschreibung

Die Erfindung betrifft eine strömungsakustisch optimierte Rohrleitung umfassend ein flexibles Leitungsrohr und Dämpfungsmittel zur Reduzierung einer Schallübertragung durch ein das Leitungsrohr durchströmendes, im Wesentlichen gasförmiges Fluid, in einem Kraftfahrzeug.

Derartige schallgedämpfte Rohrleitungen kommen üblicherweise in Kraftfahrzeugen oder Maschinen zum Einsatz, bei denen der Mensch in der unmittelbaren Nähe zu der Maschine wirkt. Insbesondere werden derartige schallgedämpfte Rohrleitungen in Kraftfahrzeugen verwendet. Schallgedämpfte Rohrleitungen sind aus der US 3,746,126 sowie aus der GB 144,845 bekannt.

Allgemein bekannt ist die Schalldämpfung von Rohren oder Leitungen durch Einbringen von Schalldämpfern in Form von schallabsorbierenden Volumina oder so genannten Resonatoren durch die das Fluid hindurch fließen kann beziehungsweise durch die das Fluid eine längere Strecke zurücklegen kann.

Dies hat den Nachteil, dass das Rohrvolumen zur Aufnahme der Volumina gegenüber dem nicht schallgedämpften Rohrvolumen wesentlich erhöht ist wodurch zusätzlich die Flexibilität des Rohres eingeschränkt ist.

Es ist daher die Aufgabe der vorliegenden Erfindung eine Kraftfahrzeug-Rohrleitung zu schaffen, bei der die Schallübertragung durch das durchströmende Fluid reduziert ist, ohne dass die Flexibilität der Rohrleitung eingeschränkt ist und die Rohrleitung größer baut.

Diese Aufgabe wird ausgehend von einer schallgedämpften Rohrleitung gemäß dem Oberbegriff des Anspruchs 1 in Verbindung mit dessen kennzeichnenden Merkmalen gelöst. Vorteilhafte Weiterbildungen der Erfindung sind in den abhängigen Ansprüchen angegeben.

Die Erfindung schließt die technische Lehre ein, dass die in dem durchströmbaren Leitungsrohrinnenraum des Leitungsrohrs angeordneten Dämpfungsmittel undurchströmbar sind, um eine Verwirbelung des durchströmenden Fluids zu bewirken, so dass die durch das durchströmende Fluid übertragenen Schwingungen reduziert werden, wobei das Leitungsrohr als ein Kunststoffrohr ausgebildet ist, welches in einem Kraftfahrzeug zum Einsatz kommt und beispielsweise ein Tankentlüftungsventil mit einem Aktivkohlefilter verbindet und/oder zwischen Motor und Karosserie angeordnet ist.

Diese Lösung hat den Vorteil, dass das durch den Rohrleitungsinnenraum strömende Fluid die gleiche Wegstrecke wie bei einer nicht schallgedämpften Rohrleitung zurücklegen muss und weiterhin keine wesentliche Querschnittsvergrößerung der Rohrleitung erfolgen muss, um eine Schalldämpfung des durchströmenden Fluids zu bewirken. Die verwendeten Rohrleitungen können prinzipiell jeden Rohrleitungsquerschnitt aufweisen. Es hat sich jedoch als vorteilhaft herausgestellt, dass der Rohrleitungsquerschnitt kreisförmig ausgebildet ist. Bei dem durchströmenden Fluid im Sinne der Erfindung handelt es sich um im Wesentlichen gasförmige Fluide, welche eine Schallübertragung bewirken. Unter Schall beziehungsweise Schallübertragung wird jede als akustisch mittels der menschlichen Sensorik wahrnehmbare Schwingung bezeichnet. Hierunter fallen insbesondere pulsierende Schwingungen, auch Pulsation, und auch Schwingungen, die ein Pfeifton, das heißt ein relativ hochfrequentes akustisches Signal gemessen an der Skala der durch den Menschen wahrnehmbaren Frequenzen erzeugen.

Von dem Tankentlüftungsventil beziehungsweise durch Gasschwingungen im Ansaugtrakt wird eine Pulsation ausgesendet, welche deutlich in der Fahrgastzelle des Kraftfahrzeugs und im näheren Umfeld des Kraftfahrzeugs durch dort befindliche Personen wahrnehmbar ist. Eine erfindungsgemäße Rohrleitung dämpft das übertragene akustische Signal, so dass es für in der Fahrgastzelle und im näheren Umfeld des Kraftfahrzeuges befindliche Personen nicht wahrgenommen wird.

In Kraftfahrzeugen kommen vorteilhafter Weise insbesondere Kunststoffrohre aufgrund ihres geringen Gewichts zum Einsatz. Diese Kunststoffrohre sind zudem dünnwandig ausgebildet, um Gewicht einzusparen und um der Rohrleitung eine gewisse Flexibilität zu verleihen.

Vorteilhaft ist, dass das Kunststoffrohr eine glatte Leitungsrohrinnenwand aufweist, da es so zu geringen Reibungsverlusten zwischen Fluid und der Leitungsrohrinnenwand kommt. Bei Kunststoffrohren mit glatter Innenwand handelt es sich um die gängigsten Kunststoffrohre, so dass diese in allen Größen und Formen für den Einsatz in einem Kraftfahrzeug vorhanden sind und so ohne großen Herstellungs- oder Bearbeitungsaufwand verwendet werden können.

Die Erfindung ist auch dazu geeignet Pulsation in starren Rohren und anderen Materialien zu dämpfen.

Eine wesentliche die Erfindung weiter verbessernde Maßnahme erhält man dadurch, dass das Dämpfungsmittel als im Wesentliches wellenförmiges und/oder spiralförmiges Band ausgebildet ist, welches eine definierte Anzahl von Wendeln beziehungsweise Wellen aufweist, wobei die Wendeln beziehungsweise Wellen mit einem definierten Steigungsgrad beziehungsweise einer definierten Wellenlänge ausgebildet sind, wodurch eine definierte Verwirbelung des durchströmenden Fluids erzeugbar ist. Durch diese Veränderung des Strömungsprofils innerhalb des Leitungsrohrs ändert sich auch die Schallübertragung in der Art, dass eine deutliche Reduzierung des übertragenen Schalls erreicht wird.

Eine besondere Ausführungsform des Dämpfungsmittels sieht vor, dass das Dämpfungsmittel einen im Wesentlichen geometrisch definierten Querschnitt aufweist, umfassend elliptische, ovale und rechteckige Geometrien beziehungsweise Querschnitte. Weiterhin ist jede beliebige Geometrie einsetzbar, die sich verwinden beziehungsweise verbiegen lässt. Vorzugsweise sind die Querschnitte aus fertigungstechnischen Gründen jedoch einfache Geometrien, wie die zuvor aufgeführten Beispiele. Als besonders günstig hat sich ein im Wesentlichen elliptischer Querschnitt herausgestellt. Dieser elliptische Querschnitt ermöglicht eine einfache Herstellung des Dämpfungsmittels bei einer hohen Stabilität und geringem Fließwiderstand, so dass eine optimale Geräuschdämpfung beziehungsweise eine reduzierte Schallübertragung realisiert ist.

Um eine leichte Bauweise zu erzielen, hat es sich als vorteilhaft herausgestellt, dass das Dämpfungsmittel aus einem Kunststoff hergestellt ist, der im Wesentlichen die gleichen Eigenschaften aufweist, wie der Werkstoff des umgebenden Leitungsrohres. Prinzipiell sind jedoch auch andere Werkstoffe einsetzbar.

Vorzugsweise ist das Dämpfungsmittel im Wesentlichen koaxial zum Leitungsrohr angeordnet. Dabei wird das Dämpfungsmittel einfach in das Leitungsrohr eingebracht, ohne dass das Dämpfungsmittel an der Leitungsrohrinnenwand befestigt ist. Aufgrund der Abmaße, insbesondere der äußeren Abmaße, des Dämpfungsmittels, welche in etwa den inneren Abmaßen des Leitungsrohrs entsprechen, liegt das Dämpfungsmittel etwa mittig oder genauer koaxial in dem Leitungsrohr. Dadurch dass das Dämpfungsmittel koaxial zum Leitungsrohr angeordnet ist, können die Oberseite und die Unterseite des spiralförmig gewundenen Dämpfungsmittels gleichzeitig auf das durchströmende Fluid wirken und so eine optimale Verwirbelung zur Reduzierung der Schalldämpfung bewirken.

Um eine optimale Reduzierung der Schalldämpfung zu bewirken, ist das Dämpfungsmittel jeweils auf den speziellen Einsatz hin zu optimieren. In zahlreichen Versuchen hat sich dabei herausgestellt, dass die Anzahl der Wendeln beziehungsweise Wellen, die Länge des Dämpfungsmittels, die Gesamtlänge des Rohres und der Steigungsgrad beziehungsweise die Wellenlänge abzustimmen sind. Beispielsweise ist die Anzahl der Wendeln beziehungsweise Wellen des Dämpfungsmittels abhängig von der in axialer Richtung zu der Längsachse gemessenen Gesamtlänge des Leitungsrohrs abzustimmen ist.

Weiterhin hat sich gezeigt, dass der Steigungsgrad beziehungsweise die Wellenlänge der Wendeln beziehungsweise Wellen abhängig von der in axialer Richtung zu der Längsachse gemessenen Gesamtlänge des Leitungsrohrs ist und dementsprechend abzustimmen ist.

Durch die Abstimmung lässt sich für alle Anwendungsfälle und Einsatzgebiete eine optimale Schallreduzierung erzielen.

Insbesondere hat es sich als vorteilhaft erwiesen, einen als Turbulator ausgebildeten Turbulenzgenerator in einem Leitungsrohr zur Verwirbelung des durchströmenden Fluids und damit zur Reduzierung des durch das Fluid übertragenen Schalls zu verwenden, wobei das Leitungsrohr beispielsweise zwischen Motor und Karosserie beziehungsweise zwischen einem Tankentlüftungsventil und einem Aktivkohlefilter angeordnet ist. Hierzu lassen sich gängige Turbulenzgeneratoren wie beispielsweise Turbolatoren verwenden. Diese werden unter anderem schon in Leitungen für im Wesentlichen flüssige Fluide zur Verbesserung der Benetzung der Leitungsinnenwand verwendet, wodurch sich ein wesentlich gesteigerter Wärmeaustausch zwischen Rohr und Fluid erzielen lässt. Ein Einsatz als Schalldämpfer für Leitungen, die mit einem gasförmigen Fluid durchströmt werden ist jedoch neu, wobei der verwendete Turbulator und die Leitungslänge entsprechend ausgebildet sein müssen, um eine optimale Geräuschdämpfung zu ermöglichen.

Bei Versuchen hat sich die Verwendung eines Turbulators in einem Leitungsrohr, welches zwischen einem Tankentlüftungsventil und einem Aktivkohlefilter angeordnet ist, als vorteilhaft beziehungsweise als geräuschreduzierend erwiesen.

Weitere die Erfindung verbessernden Maßnahmen sind in den Unteransprüchen angegeben oder werden nachstehend gemeinsam mit der Beschreibung eines bevorzugten Ausführungsbeispiels der Erfindung anhand der Figuren näher dargestellt. Es zeigt:
- Fig. 1: eine perspektivische Ansicht eines Dämpfungsmit- tels,
- Fig. 2: eine Seitenansicht eines Ausschnitts des Dämp- fungsmittels nach Fig. 1 und
- Fig. 3: eine schematische Darstellung der Anordnung des Ausschnitts des Dämpfungsmittels nach Fig. 1 in einer Rohrleitung.

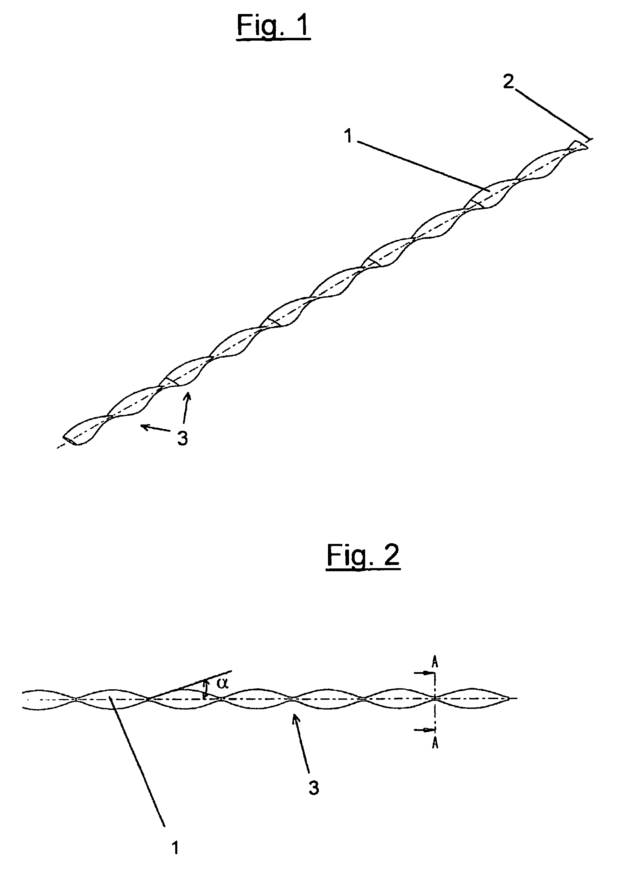

Das Dämpfungsmittel 1 nach Fig. 1 ist als im Wesentlichen spiralförmig beziehungsweise wellenförmig ausgebildetes Band oder als spiralförmiger beziehungsweise wellenförmiger Materialstreifen ausgebildet. Dabei weist der Materialstreifen in Längsrichtung eine Mittelachse 2 auf, um die der Materialstreifen beziehungsweise das Band oder allgemein das Dämpfungsmittel 1 gewunden beziehungsweise gewellt ist. Durch den elliptischen Querschnitt des Dämpfungsmittels 1 entstehen durch die Verwindung beziehungsweise Verbiegung um die Längsachse 2 so genannte Wendeln 3 beziehungsweise Wellen, wobei die Wendeln 3 beziehungsweise Wellen einen Steigungsgrad beziehungsweise eine Wellenlänge aufweisen. Die Wendeln 3 beziehungsweise Wellen sind gleichmäßig über das Dämpfungsmittel in axialer Richtung verteilt.

In Fig. 2 ist das Dämpfungsmittel 1 in einer Seitenansicht dargestellt. Man erkennt deutlich die Wendeln 3. Schematisch ist der Steigungsgrad α einer Wendel 3 dargestellt. Man erkennt, dass die Wendeln 3 im Wesentlichen gleichmäßig mit einem im Wesentlichen gleichen Steigungsgrad α über das Dämpfungsmittel 1 angeordnet sind.

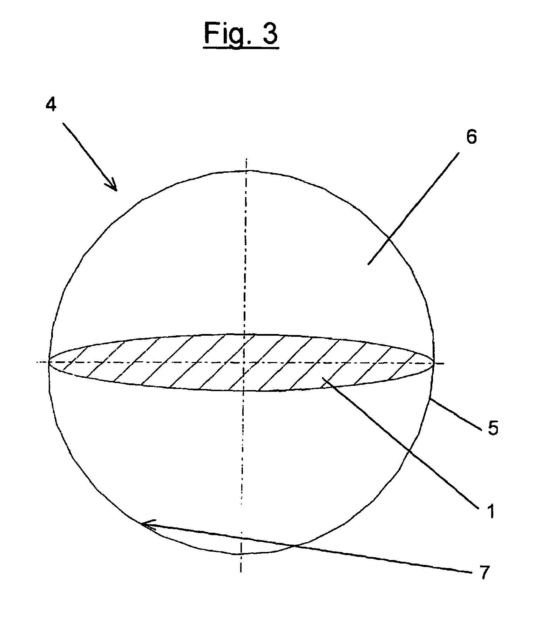

In Fig. 3 ist schematisch eine strömungsakustisch optimierte, flexible Rohrleitung 4 umfassend ein Leitungsrohr 5 mit einem Leitungsrohrinnenraum 6, der von einer Leitungsrohrinnenwand 7 begrenzt ist und einem etwa mittig in dem Leitungsrohr 5, genauer dem Leitungsrohrinnenraum 6 angeordnetes Dämpfungsmittel 1 im Querschnitt dargestellt. Der Querschnitt des Leitungsrohrs 5, genauer des Leitungsrohrinnenraums 6 ist kreisförmig, der Querschnitt des Dämpfungsmittels 1 elliptisch ausgebildet, wobei die elliptische Querschnittsfläche des Dämpfungsmittels 1 in etwa mittig zu der kreisförmigen Querschnittsfläche des Leitungsrohrinnenraums 6 in dem Leitungsrohr 5 angeordnet ist, das heißt die Mittelpunkte der Querschnittsgeometrie des Dämpfungsmittels 1 und des Rohrleitungsinnenraums 6 sind im Wesentlichen deckungsgleich. Das Dämpfungsmittel 1 tangiert die Leitungsrohrinnenwand 7 jeweils mit der am weitesten von der Längsachse entferntesten Oberfläche, wodurch der Leitungsrohrinnenraum 6 in zwei Leitungsrohrabschnitte unterteilt ist. Durch den Kontakt mit der Leitungsrohrinnenwand 7 wird das Dämpfungsmittel 1 in etwa in der Mitte des Leitungsrohrinnenraums 6 gehalten, wobei das Dämpfungsmittel 1 lose nach Art einer Spielpassung gelagert ist. Durch diese Anordnung entsteht eine durch die Struktur des Dämpfungsmittels 1 hervorgerufene Verwirbelung des durch das Leitungsrohr 5 beziehungsweise durch die Rohrleitung 4 strömenden Fluids.

### Bezugszeichenliste

- **1**: Dämpfungsmittel
- **2**: Längsachse
- **3**: Wendel
- **4**: Schwingungsakustisch optimierte Rohrleitung
- **5**: Leitungsrohr
- **6**: Leitungsrohrinnenraum
- **7**: Leitungsrohrinnenwand
- α: Steigungsgrad

## Patentansprüche

1. Kraftfahrzeug mit einer strömungsakustisch optimierten Rohrleitung (4) die ein Leitungsrohr (5) und Dämpfungsmittel (1) zur Reduzierung einer Schallübertragung durch ein das Leitungsrohr (5) durchströmendes, im Wesentlichen gasförmiges Fluid umfasst, **dadurch gekennzeichnet, dass** die in dem durchströmbaren Leitungsrohrinnenraum (6) des Leitungsrohrs (5) angeordneten Dämpfungsmittel (1) undurchströmbar sind, um eine Verwirbelung des durchströmenden Fluids zu bewirken, so dass die durch das durchströmende Fluid übertragenen Schwingungen reduziert sind, wobei das Leitungsrohr (5) als ein flexibles Kunststoffrohr ausgebildet ist, welches ein Tankentlüftungsventil mit einem Aktivkohlefilter verbindet und/oder zwischen Motor und Karosserie angeordnet ist.

2. Kraftfahrzeug mit einer Rohrleitung (4) nach Anspruch 1, **dadurch gekennzeichnet, dass** das Kunststoffrohr eine glatte Leitungsrohrinnenwand (7) aufweist.

3. Kraftfahrzeug mit einer Rohrleitung (4) nach einem der vorherigen Ansprüche, **dadurch gekennzeichnet, dass** das Dämpfungsmittel (1) als im Wesentliches wellenförmiges und/oder spiralförmiges Band ausgebildet ist, welches eine definierte Anzahl von Wendeln (3) beziehungsweise Wellen aufweist, wobei die Wendeln (3) beziehungsweise Wellen mit einem definierten Steigungsgrad (α) beziehungsweise Wellenlänge ausgebildet sind, wodurch eine definierte Verwirbelung des durchströmenden Fluids erzeugbar ist.

4. Kraftfahrzeug mit einer Rohrleitung (4) nach einem der vorherigen Ansprüche, **dadurch gekennzeichnet, dass** das Dämpfungsmittel (1) einen im Wesentlichen geometrisch definierten Querschnitt aufweist, umfassend elliptische, ovale und rechteckige Geometrien.

5. Kraftfahrzeug mit einer Rohrleitung (4) nach einem der vorherigen Ansprüche, **dadurch gekennzeichnet, dass** das Dämpfungsmittel (1) aus einem Kunststoff hergestellt ist, der im Wesentlichen den Eigenschaften des umgebenden Leitungsrohrs (5) entspricht.

6. Kraftfahrzeug mit einer Rohrleitung (4) nach einem der vorherigen Ansprüche, **dadurch gekennzeichnet, dass** das Dämpfungsmittel (1) im Wesentlichen koaxial zum Leitungsrohr (5) angeordnet ist.

7. Kraftfahrzeug mit einer Rohrleitung (4) nach einem der vorherigen Ansprüche, **dadurch gekennzeichnet, dass** die Anzahl der Wendeln (3) beziehungsweise Wellen abhängig von der in axialer Richtung zu der Längsachse (2) gemessenen Gesamtlänge des Leitungsrohrs (5) ist.

8. Kraftfahrzeug mit einer Rohrleitung (4) nach einem der vorherigen Ansprüche, **dadurch gekennzeichnet, dass** der Steigungsgrad (α) beziehungsweise die Wellenlänge der Wendel (3) beziehungsweise der Wellen abhängig von der in axialer Richtung zu der Längsachse (2) gemessenen Gesamtlänge des Leitungsrohrs (5) ist.

## Claims

1. A motor vehicle with a flow-acoustically optimized pipeline (4) which comprises a conduit pipe (5) and damping means (1) for reducing sound transmission through a substantially gaseous fluid that flows through the conduit pipe (5), **characterized in that** the damping means (1) arranged in the inner space (6) of the conduit pipe (5) through which the gaseous fluid flows is impermeable to flow in order to produce a vortex of the fluid flow, so that the vibrations transmitted by the fluid flow are reduced, with the conduit pipe (5) being arranged as a flexible plastic pipe which connects a canister purge valve with an activated-carbon filter and/or is arranged between engine and car body.

2. A motor vehicle with a pipeline (4) according to claim 1, **characterized in that** the plastic pipe has a smooth inner wall (7) of the conduit pipe.

3. A motor vehicle with a pipeline (4) according to one of the preceding claims, **characterized in that** the damping means (1) is arranged as a substantially undulating and/or spiral band which comprises a defined number of spirals (3) or waves, with the spirals (3) or waves being provided with a defined gradient (α) or wavelength, by means of which a defined vortex of the fluid flow can be produced.

4. A motor vehicle with a pipeline (4) according to one of the preceding claims, **characterized in that** the damping means (1) has a substantially geometrically defined cross section, comprising elliptical, oval and rectangular geometries.

5. A motor vehicle with a pipeline (4) according to one of the preceding claims, **characterized in that** the damping means (1) is made of plastic which substantially corresponds to the properties of the surrounding conduit pipe (5).

6. A motor vehicle with a pipeline (4) according to one of the preceding claims, **characterized in that** the damping means (1) is arranged substantially coaxially to the conduit pipe (5).

7. A motor vehicle with a pipeline (4) according to one of the preceding claims, **characterized in that** the number of the spirals (3) or waves depends on the total length of the conduit pipe (5) as measured in the axial direction relative to the longitudinal axis (2).

8. A motor vehicle with a pipeline (4) according to one of the preceding claims, **characterized in that** the gradient (α) or the wavelength of the spirals (3) or the waves depends on the total length of the conduit pipe (5) as measured in the axial direction relative to the longitudinal axis (2).

## Revendications

1. Véhicule à moteur avec une conduite (4) optimisée du point de vue des bruits d'écoulement, qui comprend un tuyau (5) et des moyens d'insonorisation (1) pour la réduction d'une transmission des sons par un fluide sensiblement gazeux parcourant le tuyau (5), **caractérisé en ce que** les moyens d'insonorisation (1) disposés dans l'espace intérieur (6) du tuyau (5) pouvant être parcouru par le fluide ne peuvent pas être parcourus par le fluide, afin de créer une turbulence du fluide en circulation de façon à réduire les vibrations transmises par le fluide en circulation, le tuyau (5) étant conformé comme un tuyau en plastique flexible qui relie une soupape de dégazage de réservoir à un filtre au charbon actif et/ou qui est disposé entre le moteur et la carrosserie.

2. Véhicule à moteur avec une conduite (4) selon la revendication 1, **caractérisé en ce que** le tuyau en plastique présente une paroi intérieure de tuyau (7) lisse.

3. Véhicule à moteur avec une conduite (4) selon l'une des revendications précédentes, **caractérisé en ce que** le moyen d'insonorisation (1) est conformé comme une bande sensiblement ondulée et/ou en spirale, qui présente un nombre défini de tours (3) ou d'ondulations, les tours (3) ou ondulations étant formés selon un angle de pente (α) défini ou une longueur d'ondulation définie, ce qui permet de créer une turbulence définie dans le fluide en circulation.

4. Véhicule à moteur avec une conduite (4) selon l'une des revendications précédentes, **caractérisé en ce que** le moyen d'insonorisation (1) présente une section géométrique sensiblement définie, comprenant des géométries elliptiques, ovales et rectangulaires.

5. Véhicule à moteur avec une conduite (4) selon l'une des revendications précédentes, **caractérisé en ce que** le moyen d'insonorisation (1) est fait d'une matière plastique correspondant pour l'essentiel aux propriétés du tuyau (5) environnant.

6. Véhicule à moteur avec une conduite (4) selon l'une des revendications précédentes, **caractérisé en ce que** le moyen d'insonorisation (1) est disposé de façon sensiblement coaxiale par rapport au tuyau (5).

7. Véhicule à moteur avec une conduite (4) selon l'une des revendications précédentes, **caractérisé en ce que** le nombre de tours (3) ou d'ondulations dépend de la longueur totale du tuyau (5) mesurée dans le sens axial par rapport à l'axe longitudinal (2).

8. Véhicule à moteur avec une conduite (4) selon l'une des revendications précédentes, **caractérisé en ce que** le degré d'inclinaison (α) ou la longueur d'ondulation des tours (3) ou des ondulations dépend de la longueur totale du tuyau (5) mesurée dans le sens axial par rapport à l'axe longitudinal (2).
